(19) Europäisches Patentamt / European Patent Office / Office européen des brevets

(11) **EP 3 392 362 B1**

(12) **EUROPEAN PATENT SPECIFICATION**

(45) Date of publication and mention
of the grant of the patent:
**01.05.2024 Bulletin 2024/18**

(21) Application number: **16876076.7**

(22) Date of filing: **16.12.2016**

(51) International Patent Classification (IPC):
**C22C 38/04** (2006.01)     **C21D 8/02** (2006.01)
**C21D 6/00** (2006.01)

(52) Cooperative Patent Classification (CPC):
**C21D 9/46; C21D 6/00; C21D 6/005; C21D 8/02;
C21D 8/0205; C21D 8/0226; C21D 8/0263;
C22C 38/04;** C21D 2211/001; C21D 2211/004

(86) International application number:
**PCT/KR2016/014810**

(87) International publication number:
**WO 2017/105134 (22.06.2017 Gazette 2017/25)**

(54) **WEAR RESISTANT STEEL MATERIAL EXCELLENT IN TOUGHNESS AND INTERNAL QUALITY, AND METHOD FOR MANUFACTURING SAME**

VERSCHLEISSFESTER STAHLWERKSTOFF MIT AUSGEZEICHNETER ZÄHIGKEIT UND INNERER QUALITÄT UND VERFAHREN ZUR HERSTELLUNG DAVON

MATÉRIAU D'ACIER RÉSISTANT À L'USURE EXCELLENT DU POINT DE VUE DE LA TÉNACITÉ ET DE LA QUALITÉ INTERNE, ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2015 KR 20150181859**

(43) Date of publication of application:
**24.10.2018 Bulletin 2018/43**

(73) Proprietor: **POSCO Co., Ltd
Pohang-si, Gyeongsangbuk-do 37859 (KR)**

(72) Inventors:
• **KIM, Yong-Jin**
  **Gwangyang-si, Jeollanam-do 57807 (KR)**
• **LEE, Soon-Gi**
  **Gwangyang-si, Jeollanam-do 57807 (KR)**
• **YI, Il-Cheol**
  **Gwangyang-si, Jeollanam-do 57807 (KR)**
• **KIM, Sung-Kyu**
  **Gwangyang-si, Jeollanam-do 57807 (KR)**
• **KANG, Sang-Deok**
  **Gwangyang-si, Jeollanam-do 57807 (KR)**
• **LEE, Un-Hae**
  **Gwangyang-si, Jeollanam-do 57807 (KR)**

(74) Representative: **Potter Clarkson
Chapel Quarter
Mount Street
Nottingham NG1 6HQ (GB)**

(56) References cited:
WO-A1-2015/099363      JP-A- 2011 230 182
JP-A- 2013 023 743      KR-A- 20070 023 831
KR-A- 20090 072 118      KR-A- 20120 038 951
US-A1- 2008 035 248      US-A1- 2008 240 969
US-A1- 2015 078 955

**Description**

[Technical Field]

The present disclosure relates to a wear resistant steel material suitable for use in industrial machinery, structural materials, steel materials for slurry pipes, steel materials in sour service, for use in the mining, transportation and storage fields, or the like, and in the oil & gas industry, requiring properties such as ductility and wear resistance. More particularly, the present disclosure relates to a wear resistant steel material excellent in terms of toughness and internal quality, and a method for manufacturing the same.

[Background Art]

In recent years, due to the growth of the mining industry as well as the oil and gas exploration industries, wear of a thick steel material (that is, a thick steel plate) used in mining, transportation, refining, and storage processes, has become a problem.

In detail, as the development of oil sands as a source of fossil fuel to replace petroleum has been regularized, wear of a steel material, caused by a slurry including oil, gravel, and sand, is a main cause of an increase in production costs. Therefore, there is significant demand for the development and application of a steel material excellent in terms of wear resistance.

In the mining industry, according to the related art, Hadfield steel, having excellent wear resistance, has mainly been used. In order to increase the wear resistance of a steel material, it has been attempted to increase an austenitic structure and wear resistance by providing a high content of carbon and a large amount of manganese. However, in the case of Hadfield steel, carbon, added in a large amount, allows carbides to be generated along an austenitic grain boundary in the form of a network at high temperature. Thus, there is a disadvantage, in that material properties of a steel material, in detail, ductility, may be rapidly lowered.

In order to suppress the precipitation of carbides in the form of a network, a method for producing high manganese steel by solution treatment at high temperature or by quenching at room temperature after hot working has been proposed. However, in the case in which a change in manufacturing conditions is problematic, such as in the case in which a thickness of a steel material is high or welding is necessarily involved, it is difficult to suppress the precipitation of the carbides in the form of a network. Therefore, there may be a problem in that material properties of a steel material may be rapidly deteriorated.

Moreover, in the case of an ingot or slab of high manganese steel, segregation of an alloying element such as manganese, carbon, and the like inevitably occurs during solidification. The occurrence of the segregation is further exacerbated in post-processing such as hot rolling, or the like. As a result, partial precipitation of carbides occurs in the form of a network along a segregation zone, deepened in a final product. Thus, non-uniformity of a microstructure is promoted, and material properties are deteriorated.

As described above, to improve wear resistance of a steel material, it is necessary to increase the content of carbon. To solve the problem in which material properties are deteriorated by carbide precipitation caused by the carbon, relatively increasing the content of manganese may be a common method. However, relatively increasing the content of manganese may result in an increase in an amount of alloys and manufacturing costs.

Therefore, in comparison with the increasing of the content of manganese, it is necessary to develop a technique, capable of suppressing the formation of carbides.

[Disclosure]

[Technical Problem]

An aspect of the present disclosure may provide a wear resistant steel material excellent in terms of toughness and internal quality, necessarily containing C and Mn to secure wear resistance, while effectively suppressing deterioration of central properties of a slab and a rolled material caused by the C and Mn.

US 2008/035248 A1 discloses a hot-rolled austenitic steel sheet comprising, by weight: $0.85\% \leq C \leq 1.05\%$; $16\% \leq Mn \leq 19\%$; $Si \leq 2\%$; $Al \leq 0.050\%$; $S \leq 0.030\%$; $P \leq 0.050\%$; $N \leq 0.1\%$ and optionally one or more elements chosen from $Cr \leq 1\%$; $Mo \leq 0.40\%$; $Ni \leq 1\%$; $Cu \leq 5\%$; $Ti \leq 0.50\%$; $Nb \leq 0.50\%$; $V \leq 0.50\%$; and a remainder of iron and unavoidable impurities.

US 2015/078955 A1 discloses a hot-rolled austenitic steel sheet comprising, by weight: $0.5\% \leq C \leq 0.7\%$; $17\% \leq Mn \leq 24\%$; $Si \leq 3\%$; $Al \leq 0.50\%$; $S \leq 0.030\%$; $P \leq 0.080\%$; $N \leq 0.1\%$; and a remainder of iron and unavoidable impurities.

WO 2015/099363 A1 discloses a low-temperature ingot steel which can be used in low temperatures as found in liquified gas storage tanks and transportation facilities. The steel has excellent surface processing quality even after processes such as tensioning.

[Technical Solution]

According to an aspect of the present disclosure, a wear resistant hot rolled steel plate having excellent toughness and internal quality, consists essentially of: carbon (C): 0.6 wt% to 1.3 wt%, manganese (Mn): 14 wt% to 22 wt%, a balance of iron (Fe) and other unavoidable impurities, and has a microstructure including carbides in an area fraction of 5% or less (including 0%) and residual austenite,

characterized in that the hot rolled steel plate has thickness of 10 mm to 80 mm and a degree of segregation of manganese (Mn), represented by Relationship 1, of 1.16 or less.

Degree of segregation of Mn = (Mn element in a central portion of a steel material) / (Mn element in molten steel)                [Relationship 1]

where, in Relationship 1, a central portion of a steel plate refers to a region of the steel plate, located above and below a 1/2t position in a thickness direction, by 50 $\mu$m or less, where t refers to a thickness (mm).

According to another aspect of the present disclosure, a method for manufacturing a wear resistant hot rolled steel plate having excellent toughness and internal quality, includes: reheating a steel slab consisting essentially of including carbon (C): 0.6 wt% to 1.3 wt%, manganese (Mn): 14 wt% to 22 wt%, a balance of iron (Fe) and other unavoidable impurities; manufacturing a hot-rolled steel plate by finish hot rolling the steel slab, having been reheated, at 850°C to 1050°C; and cooling the hot-rolled steel plate at a cooling rate of 5°C/s or more to 600°C or less, wherein the reheating is performed at a temperature (T, °C), represented by Relationship 2, or less, characterized in that the steel plate has a thickness of 10 mm to 80 mm.

$$[\text{Relationship 2}]$$
$$T(°C) = 1446 - (174.459 \times C) - (3.9507 \times Mn)$$

Here, in Relationship 2, C and Mn refer to the weight content of the element.

[Advantageous Effects]

According to an exemplary embodiment in the present disclosure, a wear resistant steel material in which an internal quality of a steel material, in addition to toughness and wear resistance, is excellent, without the addition of alloying elements other than C and Mn, may be provided.
Moreover, the wear resistant steel material, according to an exemplary embodiment in the present disclosure, may be advantageously applied to a field requiring wear resistance. In detail, a range of applications may be expanded, such as, a field in which toughness and internal quality are required.

[Description of Drawings]

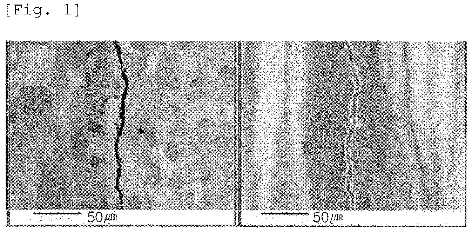

FIG. 1 is a microstructure image of Comparative Steel 4 according to an exemplary embodiment of the present disclosure, and a left image illustrates a result in which a defective portion is confirmed using a scanning electron microscope (SEM) in a UT defect test while a right image illustrates a result of EPMA measurement.

[Best Mode for Invention]

The present inventors have intensively researched a method for manufacturing a steel material having excellent internal qualities (material properties, and the like), in addition to wear resistance of a steel material. As a result, while an austenitic steel material, which has a face-centered cubic (fcc) structure, and which is high manganese steel with high contents of carbon and manganese, is used, manufacturing conditions, for controlling a steel central embrittlement problem caused by containing a large amount of carbon and manganese, are optimized. In this case, it is confirmed that a steel material with a required level of wear resistance can be provided, and the present disclosure has been accomplished.
In general, an austenitic steel material has been used for various purposes due to the properties of steel itself such as work hardenability, non-magnetic properties, and the like. In detail, as carbon steel mainly composed of ferrite or martensite, which has been mainly used, has limitations on the required material properties, an application of the austenitic steel material is increasing as a substitute for overcoming shortcomings of the carbon steel mainly composed of ferrite or martensite.

In detail, in the present disclosure, without including additional components other than C and Mn, excellent wear resistance and internal qualities of an austenitic steel material are secured. Moreover, by optimizing manufacturing conditions, not only carbide formation is significantly reduced, but also a degree of segregation of steel material thickness centerline manganese is significantly reduced.

Hereinafter, the present disclosure will be described in detail.

According to one aspect of the present disclosure, in a wear resistant steel material having excellent toughness and internal quality, an alloy composition preferably includes carbon (C) : 0.6 wt% to 1.3 wt% and manganese (Mn) : 14 wt% to 22 wt%.

Hereinafter, the reason why the alloy composition of the wear resistant steel material provided in the present disclosure is limited as described above will be described in detail. Here, the content of each component means weight% unless otherwise specified.

Carbon (C): 0.6% to 1.3%

Carbon (C), an austenite stabilizing element, serves not only to improve a uniform elongation but also to enhance the strength and increase the strain hardening rate. If the content of carbon is less than 0.6%, it is difficult to form stable austenite at room temperature and it is difficult to secure sufficient strength and strain hardening rate. On the other hand, if the content carbon exceeds 1.3%, a large amount of carbides is precipitated, so the uniform elongation is reduced. Thus, it may be difficult to secure an excellent elongation, and it is not preferable because there are problems of a reduction in wear resistance and early fracture initiation.

Thus, in the present disclosure, the content of C is preferably limited to 0.6 to 1.3%.

Manganese (Mn): 14% to 22%

Manganese (Mn) is an important element for stabilizing austenite and has an effect of improving the uniform elongation. In the present disclosure, to obtain austenite as a main structure, Mn is preferably contained in an amount of 14% or more.

However, if the content of Mn is less than 14%, austenite stability is lowered, and a martensitic structure may be formed. Thus, if an austenitic structure is not sufficiently secured, it may be difficult to secure a sufficient uniform elongation. However, if the content of Mn exceeds 22%, manufacturing costs may be increased. Moreover, it is not preferable because there may be problems of a decrease in corrosion resistance due to the addition of manganese, difficulty in a manufacturing process, and the like.

Thus, in the present disclosure, the content of Mn is preferably limited to 14% to 22%, more preferably, more than 15%.

The remainder of the present disclosure is iron (Fe). However, in a steel manufacturing process according to the related art, impurities, not intended, may be inevitably incorporated from a raw material or a surrounding environment, so such impurities cannot be excluded. All of these impurities are not specifically described in this specification, as they are commonly known to those skilled in the art of steelmaking.

The wear resistant steel material of the present disclosure satisfying an alloy composition described above preferably has an austenitic single phase, as a microstructure. However, it may contain a portion of carbides, inevitably formed in a manufacturing process, and the carbides may be preferably included in an area fraction of 5% or less (including 0%).

The carbides are formed to be concentrated in a grain boundary having higher energy as compared to an interior of a grain. If the carbides are included in an area fraction of more than 5%, ductility is reduced. Thus, there is a problem in that it may be difficult to secure desired levels of toughness, wear resistance, and the like, in the preset disclosure.

The wear resistant steel material, according to the present disclosure, satisfying the alloy composition and microstructure, described above, may secure excellent wear resistance and toughness without the addition of additional alloying elements, other than C and Mn.

In detail, a wear resistant steel material according to the present disclosure has excellent central properties, as compared to an austenitic steel material according to the related art. For example, a degree of segregation of manganese (Mn) in a central portion of a steel material, represented by Relationship 1, is 1.16 or less.

Degree of segregation of Mn = (Mn element in a central portion of a steel material) / (Mn element in molten steel)  [Relationship 1]

Here, in Relationship 1, a central portion of a steel material refers to a region of the steel material, located above and below a 1/2t position in a thickness direction, by 50 $\mu$m or less. Here, t refers to a thickness (mm).

If a degree of segregation of manganese (Mn) in a central portion of a wear resistant steel material exceeds 1.16, there may be is problems in that not only the impact toughness is deteriorated but also the UT defect is caused.

Thus, to obtain a wear resistant steel material, having excellent toughness and internal quality required in the present disclosure, a degree of segregation of manganese (Mn) in a central portion is preferably 1.16 or less, and more preferably 1.10 or less.

As described above, a wear resistant steel material according to the present disclosure has technical effects of not only securing toughness but also significantly reducing deterioration of a central portion, even when the content of Mn is high, for example, 14% or more, further more than 15%, without the addition of an additional alloying element, except for C and Mn.

Hereinafter, a method for manufacturing a wear resistant steel material having excellent toughness and internal quality according to another aspect of the present disclosure will be described in detail.

The wear resistant steel material according to the present disclosure could be manufactured by preparing a steel slab satisfying an alloy composition proposed by the present disclosure, and then reheating - hot rolling - cooling the steel slab. Hereinafter, conditions of respective processes will be described in detail

[Reheating of Steel Slab]

In the present disclosure, when a steel slab is reheated, reheating is preferably performed at a temperature (T, °C), represented by Relationship 2, or less. In this case, a temperature is preferable to satisfy a temperature range of 1100°C to 1300°C.

$$[Relationship\ 2]$$

$$T(°C) = 1446 - (174.459 \times C) - (3.9507 \times Mn)$$

Here, in Relationship 2, C and Mn refer to the weight contents of the element.

If the reheating is performed at a temperature exceeding the temperature (T) obtained by Relationship 2, partial melting occurs in segregation in a slab, so a center brittle phenomenon may occur. In detail, after a subsequent hot rolling, as a degree of segregation of manganese in a central portion exceeds 1.16, not only is impact toughness deteriorated, but a UT defect may also be caused. Thus, the reheating, performed at a temperature, exceeding the temperature (T), is not preferable.

[Hot Rolling]

The steel slab, having been reheated, is hot finish rolled to manufacture a hot-rolled steel plate. In the present disclosure, hot finish rolling is preferably performed in a temperature range of 850°C to 1050°C.

If a temperature during the hot finish rolling is less than 850°C, a large amount of carbides may be precipitated, so a reduction in a uniform elongation may be caused. Moreover, a microstructure may be pancaked, so the difference of elongation along axis caused by structural anisotropy may occur. On the other hand, if a hot finish temperature exceeds 1050°C, there may be a problem in that a crystal grain may easily become coarsening due to the active growth of the crystal grain, so strength is lowered.

The hot-rolled steel plate, obtained as described above, is a thick plate with a relatively high thickness, and has a thickness of 10mm to 80mm.

[Cooling]

In the present disclosure, by a process of rapidly cooling the hot-rolled steel plate manufactured as described above, solid solubility of carbon (C) in a matrix structure may be secured to be high. In this case, cooling is preferably performed in a matrix structure at a cooling rate of 5°C/s or more to 600°C or less.

If the cooling rate is less than 5°C/s or a cooling end temperature exceeds 600°C, there may be a problem in that C is not solidified, but is precipitated as carbides, so an elongation may be lowered.

More preferably, the cooling is performed at a cooling rate of 10°C/s or more, and further more preferably, performed at a cooling rate of 15°C/s or more. However, an upper limit of the cooling rate can be limited to 50°C/s in consideration of the limitation of the cooling facility.

Further, there is no effect on steel properties even if a cooling end temperature is lowered to room temperature. However, a lower limit of the cooling end temperature is limited to 200°C in consideration of facility efficiency.

[Mode for Invention]

Hereinafter, the present disclosure will be described in more detail with reference to Examples. It should be noted, however, that the embodiments described below are for the purpose of illustrating the present disclosure and are not intended to limit the scope of the present disclosure, since the scope of the present disclosure is determined by the matters described in the claims and matters able to be reasonably deduced therefrom.

(Example)

A steel slab, satisfying the component system and composition range as illustrated in Table 1, is used through a series of processed illustrated in Table 1 to manufacture hot-rolled steel plate having a thickness of 20mm.

Then, a microstructure of each of the hot-rolled steel plate having been manufactured, a degree of segregation of Mn in central portion, a UT defect, yield strength, a uniform elongation were measured, and a result thereof is illustrated in Table 2. Moreover, impact toughness (-40°C) with respect to the hot-rolled steel plate was measured, and a result thereof is illustrated in Table 2.

In this case, a microstructure was observed using an optical microscope, and a degree of segregation of Mn in central portion is illustrated by measuring the content of Mn in a hot-rolled steel plate central portion (a region located above and below a 1/2t position in a thickness direction, by 50 $\mu$m or less) and the content of Mn in molten steel.

Moreover, regarding a UT defect, a ultrasonic test (UT), a non-destructive test to confirm the presence or absence of cracking inside a material using ultrasonic waves, was conducted to determine whether there is a defect (Pass or Fail) . In addition, impact toughness at -40°C was measured using a Charpy impact tester.

[Table 1]

| Classificat ion | Component Composition (wt%) | | Relatio nship 2 | Manufacturing Conditions | | | |
|---|---|---|---|---|---|---|---|
| | C | Mn | | Reheating Temperature (°C) | Finish Rolling Temperature (°C) | Cooling Rate (°C/s) | Cooling Stop Temperature (°C) |
| Inventive Steel 1 | 0.65 | 16.6 | 1267.0 | 1231 | 885 | 26 | 380 |
| Inventive Steel 2 | 0.80 | 18.2 | 1234.5 | 1201 | 915 | 15 | 210 |
| Inventive Steel 3 | 1.09 | 19.5 | 1178.8 | 1164 | 1023 | 33 | 480 |
| Inventive Steel 4 | 1.23 | 14.4 | 1174.5 | 1157 | 995 | 41 | 270 |
| Comparative Steel 1 | <u>0.33</u> | 15.2 | 1328.4 | 1248 | 1025 | 21 | 490 |
| Comparative Steel 2 | <u>1.35</u> | 15.8 | 1148.1 | 1125 | 895 | 18 | 420 |
| Comparative Steel 3 | 0.65 | <u>12.2</u> | 1284.4 | 1255 | 915 | 28 | 350 |
| Comparative Steel 4 | 1.23 | 19.1 | 1156.0 | <u>1223</u> | 925 | 18 | 370 |
| Comparative Steel 5 | 0.64 | 16.4 | 1269.6 | 1215 | <u>835</u> | 21 | 385 |
| Comparative Steel 6 | 0.61 | 18.3 | 1267.3 | 1218 | 912 | <u>4</u> | 430 |
| Comparative Steel 7 | 0.75 | 17.6 | 1245.6 | 1188 | 947 | 22 | <u>650</u> |

[Table 2]

| Classification | Microstructure | Degree of segregation of Mn | UT Defect Test | Yield Strength (MPa) | Uniform Elongation Ratio (%) | Impact Toughness (-40°C) |
|---|---|---|---|---|---|---|
| Inventive Steel 1 | γ+carbide 5% or less | 1.061 | Pass | 449 | 52 | 198 |
| Inventive Steel 2 | γ+carbide 5% or less | 1.079 | Pass | 408 | 61 | 225 |
| Inventive Steel 3 | γ+carbide 5% or less | 1.120 | Pass | 496 | 55 | 210 |
| Inventive Steel 4 | γ+carbide 5% or less | 1.095 | Pass | 520 | 48 | 114 |
| Comparative Steel 1 | γ+carbide 5% or less | 1.066 | Pass | 266 | 50 | 84 |
| Comparative Steel 2 | γ+carbide 8.2% | 1.097 | Pass | 578 | 20 | 28 |
| Comparative Steel 3 | γ+M | - | Pass | 376 | 35 | 17 |
| Comparative Steel 4 | γ+carbide 5% or less | 1.184 | Fail | 301 | 52 | 29 |
| Comparative Steel 5 | γ+carbide 5.7° | 1.088 | Pass | 416 | 38 | 48 |
| Comparative Steel 6 | γ+carbide 7.1% | 1.039 | Pass | 428 | 54 | 31 |
| Comparative Steel 7 | γ+carbide 6.9% | 1.044 | Pass | 516 | 45 | 45 |

Here, in Table 2, γ refers to austenite, and M refers to martensite.

As illustrated in Tables 1 and 2, in the case of Inventive Steels 1 to 4 satisfying the alloy composition and manufacturing conditions proposed in the present disclosure, a steel material is austenitic steel, the strength, elongation, and toughness are excellent, and a degree of segregation of Mn is 1.16% or less. Thus, it is confirmed that internal quality of the steel material is excellent.

On the other hand, in the case of Comparative Steel 1, in which the content of C was insufficient, sufficient strength was not secured. In the case of Comparative Steel 2, in which the content of C was excessive, strength was secured, while ductility could not be secured.

Moreover, in the case of Comparative Steel 3 in which the content of Mn is insufficient, an austenitic phase is not stably formed. Moreover, as martensite is formed in addition to austenite, impact toughness was inferior.

In the case of Comparative Steel 4 to 7, a steel alloy composition satisfies the present disclosure, but a manufacturing condition is outside of the present disclosure. Among Comparative Steel 4 to 7, in the case of Comparative Steel 4, as a reheating temperature is higher than Relationship 2, a degree of segregation of Mn exceeds 1.16. Thus, a result of a UT defect test is fail.

Moreover, Comparative Steel 5 to 7 correspond to the cases, in which a finish hot rolling temperature, a cooling rate, and a cooling end temperature are not satisfied with the present disclosure, respectively. In Comparative Steel 5 to 7, as a large amount of carbides is formed, impact toughness was inferior.

FIG. 1 is a microstructure image of Comparative Steel 4, in which a degree of segregation of Mn in a central portion exceeds 1.16. In this case, as a result of EPMA measurement, it is confirmed that Mn segregation occurred. In a UT defect test, a defective portion could be confirmed.

While exemplary embodiments have been shown and described above, it will be apparent to those skilled in the art that modifications and variations could be made without departing from the scope of the present invention as defined by the appended claims.

**Claims**

1. A wear resistant hot rolled steel plate having excellent toughness and internal quality, consisting essentially of:

   carbon (C): 0.6 wt% to 1.3 wt%, manganese (Mn): 14 wt% to 22 wt%, a balance of iron (Fe) and other unavoidable impurities, and
   having a microstructure including carbides in an area fraction of 5% or less (including 0%) and residual austenite, **characterized in that** the hot rolled steel plate has a thickness of 10 mm to 80 mm, and a degree of segregation of manganese (Mn), represented by Relationship 1, of 1.16 or less.

Degree of segregation of Mn = (Mn element in a central portion of a steel plate)
/ (Mn element in molten steel)                                                                 [Relationship 1]

where, in Relationship 1, a central portion of a steel plate refers to a region of the steel plate, located above and below a 1/2t position in a thickness direction, by 50 um or less,
where t refers to a thickness (mm).

2. The wear resistant hot rolled steel plate having excellent toughness and internal quality of claim 1, wherein the steel plate includes manganese (Mn) greater than 15 wt%.

3. A method for manufacturing a wear resistant hot rolled steel plate having excellent toughness and internal quality, comprising:

reheating a steel slab consisting essentially of carbon (C) : 0.6 wt% to 1.3 wt%, manganese (Mn) : 14 wt% to 22 wt%, and a balance of iron (Fe) and other unavoidable impurities;
manufacturing a hot-rolled steel plate by finish hot rolling the steel slab, having been reheated, at 850°C to 1050°C; and
cooling the hot-rolled steel plate at a cooling rate of 5°C/s or more to 600°C or less,
wherein the reheating is performed at a temperature (T, °C), represented by Relationship 2, or less, **characterized in that** the steel plate has a thickness of 10 mm to 80 mm.

[Relationship 2]

$$T(°C) = 1446 - (174.459 \times C) - (3.9507 \times Mn)$$

where, in Relationship 2, C and Mn refer to the weight content of the element.

4. The method for manufacturing a wear resistant hot rolled steel plate having excellent toughness and internal quality of claim 3, wherein the steel slab includes manganese (Mn) in an amount greater than 15 wt%.

**Patentansprüche**

1. Verschleißfeste warmgewalzte Stahlplatte mit ausgezeichneter Belastbarkeit und innerer Qualität, bestehend im Wesentlichen aus:

Kohlenstoff (C): 0,6 Gew.-% bis 1,3 Gew.-%, Mangan (Mn): 14 Gew.-% bis 22 Gew.-%, einem Gleichgewicht von Eisen (Fe) und anderen unvermeidlichen Verunreinigungen; und
mit einer Mikrostruktur, welche Carbide in einem Flächenanteil von 5 % oder weniger (einschließlich 0 %) und verbleibendes Austenit beinhaltet,
**dadurch gekennzeichnet, dass** die warmgewalzte Stahlplatte eine Dicke von 10 mm bis 80 mm, und einen Grad an Abtrennung von Mangan (Mn), welcher durch Beziehung 1 dargestellt wird, von 1,16 oder weniger aufweist.

Grad an Abtrennung von Mn = (Mn-Element in einem zentralen Abschnitt einer
Stahlplatte) / (Mn-Element in geschmolzenem Stahl)                                [Beziehung 1]

wobei sich in Beziehung 1 ein zentraler Abschnitt einer Stahlplatte auf einen Bereich der Stahlplatte, welcher sich in einer Dickenrichtung um 50 $\mu$m oder weniger über und unter einer 1/2t-Position befindet,
wobei sich t auf eine Dicke (mm) bezieht.

2. Verschleißfeste warmgewalzte Stahlplatte mit ausgezeichneter Belastbarkeit und innerer Qualität nach Anspruch 1, wobei die Stahlplatte Mangan (Mn) größer als 15 Gew.-% beinhaltet.

3. Verfahren zum Herstellen einer verschleißfesten warmgewalzten Stahlplatte mit ausgezeichneter Belastbarkeit und innerer Qualität, umfassend:

Nacherwärmen einer Stahltafel, bestehend im Wesentlichen aus Kohlenstoff (C): 0,6 Gew.-% bis 1,3 Gew.-%, Mangan (Mn): 14 Gew.-% bis 22 Gew.-%, und einem Gleichgewicht von Eisen (Fe) und anderen unvermeidlichen Verunreinigungen;
Herstellen einer warmgewalzten Stahlplatte durch Warmfertigwalzen der Stahltafel, welche bei 850 °C bis 1050 °C nacherwärmt wurde; und
Kühlen der warmgewalzten Stahlplatte bei einer Abkühlgeschwindigkeit von 5 °C/s oder mehr auf 600 °C oder weniger,
wobei das Nacherwärmen bei einer Temperatur (T, °C),
welche durch Beziehung 2 dargestellt wird, oder weniger durchgeführt wird, **dadurch gekennzeichnet, dass** die Stahlplatte eine Dicke von 10 mm bis 80 mm aufweist.

[Beziehung 2]
T (°C) = 1446 - (174,459×C) - (3,9507×Mn)

wobei sich in Beziehung 2 C und Mn auf den Gewichtsanteil des Elements beziehen.

4. Verfahren zum Herstellen einer verschleißfesten warmgewalzten Stahlplatte mit ausgezeichneter Belastbarkeit und innerer Qualität nach Anspruch 3, wobei die Stahltafel Mangan (Mn) in einer Menge größer als 15 Gew.-% beinhaltet.

**Revendications**

1. Tôle d'acier laminée à chaud résistante à l'usure présentant une excellente ténacité et une excellente qualité interne, constituée essentiellement de :

carbone (C) : 0,6 % en poids à 1,3 % en poids, manganèse (Mn) : 14 % en poids à 22 % en poids, un reste de fer (Fe) et d'autres impuretés inévitables, et
présentant une microstructure comportant des carbures dans une fraction surfacique de 5 % ou moins (notamment 0 %) et de l'austénite résiduelle,
**caractérisée en ce que** la tôle d'acier laminée à chaud présente une épaisseur de 10 mm à 80 mm, et un degré de ségrégation du manganèse (Mn), représenté par la relation 1, de 1,16 ou moins.

Degré de ségrégation du Mn = (élément Mn dans une partie centrale d'une plaque d'acier) / (élément Mn dans l'acier en fusion)    [Relation 1]

où, dans la relation 1, une partie centrale d'une plaque d'acier fait référence à une région de la plaque d'acier, située au-dessus et au-dessous d'une position de l/2t dans le sens de l'épaisseur, de 50 $\mu$m ou moins,
où t fait référence à une épaisseur (mm).

2. Tôle d'acier laminée à chaud résistante à l'usure présentant une excellente ténacité et une excellente qualité interne selon la revendication 1, dans laquelle la tôle d'acier comporte du manganèse (Mn) à raison de plus de 15 % en poids.

3. Procédé de fabrication d'une tôle d'acier laminée à chaud résistante à l'usure présentant une excellente ténacité et une excellente qualité interne, comprenant :

le réchauffage d'une brame d'acier constituée essentiellement de carbone (C) : 0,6 % en poids à 1,3 % en poids, de manganèse (Mn) : 14 % en poids à 22 % en poids, et d'un reste de fer (Fe) et d'autres impuretés inévitables ;
la fabrication d'une tôle d'acier laminée à chaud par laminage final à chaud de la brame d'acier, après avoir été réchauffée, à une température de 850°C à 1050 °C ; et
le refroidissement de la tôle d'acier laminée à chaud à une vitesse de refroidissement de 5°C/s ou plus jusqu'à 600°C ou moins,
dans lequel le réchauffage est effectué à une température (T, °C), représentée par la relation 2, ou inférieure, **caractérisé en ce que** la plaque d'acier présente une épaisseur de 10 mm à 80 mm.

[Relation 2]

T(°C) = 1446 - (174,459xC) - (3,9507xMn)

où, dans la relation 2, C et Mn font référence à la teneur en poids de l'élément.

4. Procédé de fabrication d'une tôle d'acier laminée à chaud résistante à l'usure présentant une excellente ténacité et une excellente qualité interne selon la revendication 3, dans lequel la brame d'acier comporte du manganèse (Mn) en une quantité supérieure à 15 % en poids.

[Fig. 1]

## REFERENCES CITED IN THE DESCRIPTION

**Patent documents cited in the description**

- US 2008035248 A1
- US 2015078955 A1
- WO 2015099363 A1